(19) **Europäisches Patentamt European Patent Office Office européen des brevets**

(11) **EP 1 375 054 B1**

(12) **FASCICULE DE BREVET EUROPEEN**

(45) Date de publication et mention
de la délivrance du brevet:
**24.12.2008 Bulletin 2008/52**

(51) Int Cl.:
*B23K 26/12* (2006.01)   *B23K 35/38* (2006.01)
*B23K 26/32* (2006.01)   *B23K 26/26* (2006.01)
*B23K 26/30* (2006.01)

(21) Numéro de dépôt: **03291361.8**

(22) Date de dépôt: **06.06.2003**

(54) **Utilisation de melanges gazeux helium/azote en soudage laser de tubes acier**

Gebrauch von Helium/Stickstoff-Gasgemischen beim Schweissen von Stahlrohren

Use of helium/nitrogen gas mixtures in laser welding of steel tubes

(84) Etats contractants désignés:
**AT BE BG CH CY CZ DE DK EE ES FI FR GB GR HU IE IT LI LU MC NL PT RO SE SI SK TR**

(30) Priorité: **14.06.2002 FR 0207347**

(43) Date de publication de la demande:
**02.01.2004 Bulletin 2004/01**

(73) Titulaire: **L'AIR LIQUIDE, Société Anonyme pour l'Etude
et l'Exploitation des Procédés Georges Claude
75007 Paris (FR)**

(72) Inventeurs:
• **Briand, Francis
75009 Paris (FR)**
• **Chouf, Karim
93380 Epinay S/Seine (FR)**
• **Lefebvre, Philippe
95310 Saintouen L'Aumone (FR)**
• **Verna, Eric
95650 Boissy L'Aillerie (FR)**

(74) Mandataire: **Pittis, Olivier et al
L'Air Liquide S.A.
75, quai d'Orsay
75321 Paris Cedex 07 (FR)**

(56) Documents cités:
• **PATENT ABSTRACTS OF JAPAN vol. 1997, no. 12, 25 décembre 1997 (1997-12-25) & JP 09 220682 A (NKK CORP), 26 août 1997 (1997-08-26)**

**Description**

La présente invention concerne l'utilisation de mélanges gazeux formés uniquement d'hélium et d'azote dans un procédé de soudage laser, à une puissance maximale de 12 kW, de tubes en acier inoxydable austénitique, martensitique ou ferritique.

Il a déjà été proposé de souder des tubes, en longitudinal ou en hélicoïdal, en mettant en oeuvre un faisceau laser.

En effet, le soudage par faisceau laser est un procédé d'assemblage très performant car il permet d'obtenir, à des vitesses élevées, des profondeurs de pénétration très importantes si on les compare à d'autres procédés plus traditionnels, tel le soudage plasma, le soudage MIG (Métal Inert Gas) ou le soudage TIG (Tungsten Inert Gas).

Ceci s'explique par les fortes densités de puissances mises en jeu lors de la focalisation, par un ou plusieurs miroirs ou lentilles, du faisceau laser au niveau du plan de jonction des pièces à souder, par exemple des densités de puissance pouvant dépasser $10^6$ W/cm$^2$

Ces fortes densités de puissance provoquent une forte vaporisation à la surface des pièces qui, en se détendant vers l'extérieur, induit un creusement progressif du bain de soudage et conduit à la formation d'un capillaire de vapeur étroit et profond, appelé "*keyhole*" en anglais (= "trou de serrure") dans l'épaisseur des tôles, c'est-à-dire au niveau du plan de joint.

Ce capillaire permet un dépôt direct de l'énergie du faisceau laser en profondeur dans la tôle et ce, par opposition avec les procédés de soudage plus conventionnels où le dépôt d'énergie est localisé à la surface.

A ce titre, on peut citer les documents suivants : DE-A-2713904, DE-A-4034745, JP-A-01048692, JP-A-56122690, WO 97/34730, JP-A-01005692, DE-A-4123716, JP-A-02030389, US-A-4,871,897, JP-A-230389, JP-A-62104693, JP-A-15692, JP-A-15693, JP-A-15694, JP-A-220681, JP-A-220682, JP-A-220683, WO-A-88/01553, WO-A-98/14302 DE-A-3619513 et DE-A-3934920.

Ce capillaire est constitué d'un mélange de vapeurs métalliques et de plasma de vapeurs métalliques dont la particularité est d'absorber le faisceau laser et donc de piéger l'énergie au sein du capillaire même.

Une des problématiques du soudage laser est la formation d'un plasma de gaz de couverture.

En effet, ce plasma de vapeurs métalliques, en ensemençant en électrons libres le gaz de couverture ou gaz de protection, peut déclencher l'apparition d'un plasma de gaz de couverture qui est préjudiciable à l'opération de soudage.

Le faisceau laser incident peut alors être fortement perturbé par le plasma de gaz de couverture.

L'interaction du plasma de gaz de couverture avec le faisceau laser peut prendre divers forme, mais le plus souvent, cela se traduit par un effet d'absorption et/ou de diffraction du faisceau laser incident qui peut conduire à une réduction importante de la densité de puissance laser efficace à la surface de la cible, entraînant une diminution de la profondeur de pénétration, voire une perte de couplage entre le faisceau et la matière et donc à une interruption momentanée du processus de soudage.

Le seuil de densité de puissance à partir duquel le plasma apparaît dépend du potentiel d'ionisation du gaz de couverture utilisé et est inversement proportionnel au carré de la longueur d'onde du faisceau laser.

Ainsi, il est très difficile de souder sous argon pur avec un laser de type $CO_2$, tandis que cette opération peut être réalisée avec beaucoup moins de problème avec un laser de type YAG.

En général, en soudage laser $CO_2$, on utilise comme gaz de couverture de l'hélium qui est un gaz à haut potentiel d'ionisation et qui permet de se prémunir de l'apparition du plasma de gaz de couverture et ce, jusqu'à une puissance laser d'au moins 45kW.

L'hélium a cependant l'inconvénient d'être un gaz onéreux et de nombreux utilisateurs de laser préféraient utiliser d'autres gaz ou mélanges gazeux moins onéreux que l'hélium mais qui permettraient néanmoins de limiter l'apparition du plasma de gaz de couverture et donc d'obtenir des résultats de soudage similaires à ceux obtenus avec l'hélium mais à un coût moindre.

Ainsi, il existe au plan commercial des mélanges gazeux contenant de l'argon et de l'hélium, par exemple le mélange gazeux contenant 30 % en volume d'hélium et le reste étant de l'argon, commercialisé sous l'appellation LASAL$^{TM}$ 2045 par la société L'AIR LIQUIDE$^{TM}$, lesquels permettent d'obtenir sensiblement les mêmes résultats que l'hélium, pour des puissances laser $CO_2$ inférieures à 5kW et pourvu que les densités de puissance engendrées ne soient pas trop importantes, c'est-à-dire environ supérieures à 2000 kW/cm$^2$.

Cependant, le problème qui se pose avec ce type de mélange Ar/He est que pour des densités de puissance laser plus importantes, il n'est plus adapté car le seuil de création du plasma de gaz de protection est alors dépassé, ce qui empêche l'obtention d'une soudure à pleine pénétration lors du soudage d'un tube en acier inoxydables.

Or, dans le cas du soudage d'un tube, il est primordial que la pénétration de la soudure soit totale ou quasi-totale pour éviter toute rupture ultérieure du tube ainsi soudé, lors des opérations de mise en forme telles que le cintrage ou l'évasement, ou lors de son utilisation subséquente, lorsque le tube est soumis à des contraintes diverses, telles que thermiques et/ou mécaniques, ou encore lorsqu'il doit servir à véhiculer des produits corrosifs.

De plus, dans certains cas d'application le tube soudé doit avoir une résistance élevée à la corrosion par piqûre, c'est-à-dire un index PI de piqûre (Pitting index en anglais) en rapport avec l'application.

L'index PI étant défini par la formule ci-après :

$$PI = [\%Cr] + 3,3 \times [\%Mo] + 16 \times [\%N]$$

où : [%Cr], [%Mo] et [%N] désignent les proportions en poids de chrome, de molybdène et d'azote dans la soudure.

Comme on le comprend au vu de cette formule, la résistance à la corrosion par piqûre augmente avec la teneur en chrome, avec la teneur en molybdène dont l'effet sur la résistance à la corrosion par piqûre est 3.3 fois plus importante que celui en chrome, et avec la teneur en azote dont l'effet est 16 fois plus importante que celui du chrome.

Pour une application nécessitant une bonne résistance à la corrosion par piqûre dans un milieu particulier, la nuance d'acier retenue, donc son analyse, est fonction du milieu.

Lorsque cet acier est soudé, quel que soit le procédé de soudage, pendant la solidification du métal en fusion, il se produit toujours des ségrégations, les premières partie solidifiées (coeur des dendritiques) étant en général moins chargées en éléments d'alliages que les dernières (espaces inter dendritiques).

Par ailleurs, le soudage d'acier inoxydables austénitiques conduit souvent dans le métal en fusion à une structure mixte austénite + ferrite. La composition chimique de ces deux phases diffère : l'austénite est plus riche en élément dit gammagènes (éléments favorisant la stabilité de la phase $\gamma$ (austénite)) tandis que la ferrite est plus riche en éléments alphagènes (éléments favorisant la stabilité de la phase $\alpha$ (ferrite)).

Le carbone (C), l'azote (N) et le nickel (Ni) sont des éléments gammagènes, tandis que le chrome (Cr), le molybdène (Mo) et le silicium (Si) sont des éléments alphagènes.

Ainsi, dans une soudure d'acier ayant une certaine teneur en Cr, Ni et Mo, on retrouvera, après solidification, des zones, plus riches que l'analyse moyenne, enrichies en Cr et Mo, et des zones enrichies en Ni, C et N, donc des zones de résistance à la corrosion différentes, certaines ayant une résistance à la corrosion nécessairement inférieures à celles du métal de base.

L'enrichissement en azote du métal fondu par l'utilisation d'un mélange gazeux contenant de l'azote permet d'atténuer sinon supprimer ces différences de résistance à la corrosion. L'azote se retrouvant en majorité dans la phase austénitique compense partiellement ou totalement la moindre teneur en Cr et Mo de cette phase liée à l'enrichissement de la ferrite en ces éléments.

Ainsi, le document JP-A-09220682 préconise un procédé de soudage laser de tube en acier duplex avec un mélange He/N$_2$, l'acier duplex étant un acier présentant un index de piqûre généralement élevé, c'est-à-dire toujours supérieur à 35.

Au vu de cela, on comprend donc que le problème reste entier pour les aciers autres que les duplex ou superduplex a forte résistance à la corrosion, c'est-à-dire les aciers présentant habituellement une plus faible résistance à la corrosion.

Le but de la présente invention est alors de proposer un procédé de soudage par laser d'un tube en acier inoxydable, plus particulièrement les aciers inoxydables de type austénitique, ferritique ou martensitique, avec un mélange gazeux de soudage à base d'azote, pouvant être mis en oeuvre avec un laser de puissance jusqu'à 12 kW, lequel conduise à l'obtention d'un joint de soudure à pleine pénétration efficace et résistant à la corrosion en particulier par piqûre et ce, malgré le fait que l'acier de base ne présentant qu'une faible résistance à la corrosion, c'est-à-dire un index de piqûre inférieur à 35.

La solution de l'invention est alors un procédé de soudage, l'un avec l'autre, des deux bords longitudinaux d'une feuille en acier inoxydable austénitique, ferritique ou martensitique, ayant une épaisseur de 0.5 à 4 mm, de manière à obtenir un tube soudé, mettant en oeuvre au moins un faisceau laser ayant une puissance allant jusqu'à 12 kW, et dans lequel on utilise un mélange gazeux constitué de 30% à 80% en volume d'azote et d'hélium pour le reste (jusqu'à 100%) pour réaliser un soudage à pénétration totale ou quasi-totale, la feuille d'acier formant le tube ayant un index de piqûre (PI) tel que :

$$PI = [\% Cr] + 3,3 \times [\% Mo] + 16 \times [\% N]$$

avec PI < 35

où : [% Cr], [% Mo] et [% N] sont les proportions pondérales en chrome, molybdène et azote dans l'acier inoxydable de la feuille à souder.

Préférablement :

- la feuille d'acier inoxydable a une épaisseur de 1 mm à 3 mm.
- le tube obtenu à un diamètre de 5 mm à 50 cm.
- le mélange gazeux est constitué de 40% à 70% en volume d'azote et d'hélium pour le reste (jusqu'à 100%), de préférence de 45 à 65% en volume d'azote, de préférence encore de 46 à 60 % d'azote.
- le laser est de type $CO_2$.
- on réalise un soudage à pénétration totale.
- préalablement au soudage des bords de la feuille métallique, lesdits bords sont rapprochés l'un de l'autre en un pré-tube non soudé en forme de O au moyen de galets presseurs.
- le tube est soudé en bord-à-bord, selon un joint axial, longitudinal ou en hélicoïdal.
- la tâche focale est circulaire ou oblongue.
- le débit de gaz est compris entre 5 l/min et 100 l/min.
- la pression du gaz est comprise entre 1 et 5 bars.
- la buse distribuant le gaz est une buse latérale ayant un diamètre allant de 3 à 30 mm ou une buse axiale ayant un diamètre allant de 1 à 50 mm.
- la feuille métallique est animée d'une vitesse de déplacement non nulle par rapport à la tête de soudage délivrant le faisceau laser.

L'invention va être mieux comprise grâce aux exemples illustratifs ci-après et aux courbes annexées.

Exemples

Afin de vérifier l'efficacité du procédé de l'invention, on a réalisé une mesure de la pénétration de lignes de fusion, partiellement pénétrées, réalisées avec un laser $CO_2$ focalisé par un miroir parabolique possédant une distance focale de 200 mm, à la surface d'une cible métallique d'acier inoxydable de type 304L (acier austénitique) et d'épaisseur égale à 12 mm.

Le gaz de protection est constitué d'un mélange $He/N_2$. La teneur en azote du mélange est reportée en pourcentage volumique sur l'axe des abscisses, le reste du mélange étant de l'hélium.

Le gaz est distribué dans la zone d'interaction par une buse latérale de forme cylindrique de diamètre égal à 12 mm et à un débit de 24 l/min. La vitesse de soudage est de 3.5 m/min.

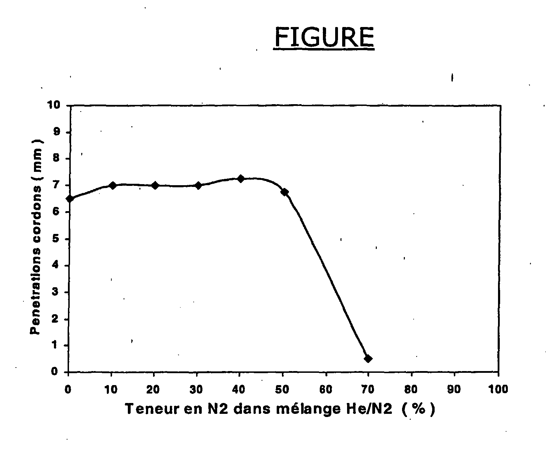

Comme on peut le voir sur la figure ci-annexée, la pénétration des cordons de soudure est au minimum conservée pour des teneurs en azote importantes, c'est-à-dire allant de 30 à 80% en volume.

On observe même une augmentation surprenante de la pénétration des cordons de l'ordre de 5 à 10% dans certains cas.

Autrement dit, les mélanges hélium/argon selon l'invention conduisent à des pénétrations de cordons de soudures au moins égales à celles obtenues avec de l'hélium, tout en améliorant la nature du cordon de soudure envers : mouillabilité, congé de raccordement, aspect...

En effet, la nature de l'envers du cordon sera d'autant meilleure que la puissance laser traversant la tôle sera supérieure à au moins 5% de la puissance laser incidente.

Or, il apparaît que pour des paramètres de soudage équivalents, la puissance laser traversant l'épaisseur de la tôle au cours du processus de soudage au travers du capillaire ou « keyhole », soit plus importante dans le cas de l'utilisation d'un gaz de protection formé d'un mélange d'hélium et d'azote que dans le cas d'un gaz de protection composé uniquement d'hélium.

La dissociation endothermique de la molécule d'azote au voisinage de la plume de plasma métallique de surface entraîne une diminution de la température de cette dernière.

L'absorption du faisceau laser incident par la plume de plasma métallique est alors moins efficace et la quantité d'énergie laser disponible au-delà de l'épaisseur de la tôle légèrement plus importante.

Ce type de résultats est reproductible si l'on fait varier l'un des paramètres expérimentaux précédents.

Le procédé de l'invention est particulièrement bien adapté à une intégration sur une chaîne automatisée de production de tubes soudés sur laquelle la mise en forme de la feuille métallique (en forme de O) et son déplacement sont automatisés et se font notamment au moyen de galets d'entraînement et de galets presseurs.

**Revendications**

1. Procédé de soudage, l'un avec l'autre, des deux bords longitudinaux d'une feuille en acier inoxydable austénitique, ferritique ou martensitique, ayant une épaisseur de 0.5 à 4 mm, de manière à obtenir un tube soudé, mettant en oeuvre au moins un faisceau laser ayant une puissance allant jusqu'à 12 kW, et dans lequel on utilise un mélange gazeux constitué de 30% à 80% en volume d'azote et d'hélium pour le reste (jusqu'à 100%) pour réaliser un soudage à pénétration totale ou quasi-totale, ladite feuille d'acier formant le tube ayant un index de piqûre (PI) tel que :

$$PI = [\% \ Cr] + 3,3 \ x \ [\% \ Mo] + 16 \ x \ [\% \ N]$$

avec PI < 35
où : [% Cr], [% Mo] et [% N] sont les proportions pondérales en chrome, molybdène et azote dans l'acier inoxydable de la feuille à souder.

2. Procédé selon la revendication 1, **caractérisé en ce que** la feuille en acier inoxydable a une épaisseur de 1 à 3 mm.

3. Procédé selon l'une des revendications 1 ou 2, **caractérisé que** le tube obtenu à un diamètre de 5 mm à 50 cm.

4. Procédé selon l'une des revendications 1 à 3, **caractérisé que** le mélange gazeux est constitué de 40% à 70% en volume d'azote et d'hélium pour le reste (jusqu'à 100%), de préférence de 45% à 65% d'azote et d'hélium pour le reste.

5. Procédé selon l'une des revendications 1 à 4, **caractérisé en ce que** le laser est de type $CO_2$.

6. Procédé selon l'une des revendications 1 à 5, **caractérisé en ce qu'**on réalise un soudage à pénétration totale.

7. Procédé selon l'une des revendications 1 à 6, **caractérisé en ce que** le mélange gazeux est constitué de 46% à 60% en volume d'azote et d'hélium pour le reste (jusqu'à 100%).

8. Procédé de fabrication d'un tube soudé à partir d'une feuille en acier inoxydable austénitique, ferritique ou martensitique dont les bords longitudinaux sont soudés l'un avec l'autre par mise en oeuvre d'un procédé de soudage à pénétration totale ou quasi-totale selon l'une des revendications 1 à 7.

**Claims**

1. Welding process, for welding together the two longitudinal edges of a sheet of austenitic, ferritic or martensitic stainless steel, having a thickness of 0.5 to 4 mm, so as to obtain a welded tube, employing at least one laser beam having a power ranging up to 12 kW, in which process a gas mixture consisting of 30% to 80% nitrogen by volume and helium for the balance (up to 100%) is used to carry out full-penetration or almost full-penetration welding, said steel sheet forming the tube having a pitting index (PI) such that:

$$PI = [\%Cr] + 3.3 \times [\%Mo] + 16 \times [\%N],$$

with PI < 35
where: [%Cr], [%Mo] and [%N] are the proportions by weight of chromium, molybdenum and nitrogen in the stainless steel of the sheet to be welded.

2. Process according to Claim 1, **characterized in that** the stainless steel sheet has a thickness of 1 to 3 mm.

3. Process according to either of Claims 1 and 2, **characterized in that** the tube obtained has a diameter of 5 mm to 50 cm.

4. Process according to one of Claims 1 to 3, **characterized in that** the gas mixture consists of 40% to 70% nitrogen in volume and helium for the balance (up to 100%), preferably 45% to 65% nitrogen and helium for the balance.

5. Process according to one of Claims 1 to 4, **characterized in that** the laser is a $CO_2$ laser.

6. Process according to one of Claims 1 to 5, **characterized in that** a full-penetration welding operation is carried out.

7. Process according to one of Claims 1 to 6, **characterized in that** the gas mixture consists of 46% to 60% nitrogen by volume and helium for the balance (up to 100%).

**8.** Process for manufacturing a welded tube from a sheet of austenitic, ferritic or martensitic stainless steel, the longitudinal edges of which are welded together by implementing a full-penetration or almost full-penetration welding process according to one of Claims 1 to 7.

**Patentansprüche**

**1.** Verfahren zum Verschweißen der beiden Längskanten eines Blechs aus austenitischem, ferritischem oder martensitischem Edelstahl mit einer Dicke von 0,5 bis 4 mm, sodass ein geschweißtes Rohr erhalten wird, wobei mindestens ein Laserstrahl mit einer Leistung von bis zu 12 kW eingesetzt wird und wobei eine Gasmischung verwendet wird, die zu 30 bis 80 Volumen% aus Stickstoff besteht, wobei Helium den Rest (von 100 %) ausmacht, um einen Schweißvorgang durchzuführen, der sich über die gesamte oder nahezu über die gesamte Tiefe des Werkstücks erstreckt, wobei das Stahlblech, aus welchem das Rohr gebildet ist, die folgende Wirksumme (PRE-Wert) aufweist:

$$PRE = [\% \ Cr] + 3,3 \ x \ [\% \ Mo] + 16 \ x \ [\% \ N]$$

mit PRE < 35
wobei [% Cr], [% Mo] und [% N] die Gewichtsanteile an Chrom, Molybdän und Stickstoff in dem Edelstahl des zu verschweißenden Blechs sind.

**2.** Verfahren nach Anspruch 1, **dadurch gekennzeichnet, dass** das Edelstahlblech eine Dicke von 1 bis 3 mm aufweist.

**3.** Verfahren nach einem der Ansprüche 1 oder 2, **dadurch gekennzeichnet, dass** das erhaltene Rohr einen Durchmesser von 5 mm bis 50 cm aufweist.

**4.** Verfahren nach einem der Ansprüche 1 bis 3, **dadurch gekennzeichnet, dass** die Gasmischung zu 40 bis 70 Volumen% aus Stickstoff besteht, wobei Helium den Rest (von 100 %) ausmacht, vorzugsweise zu 45 bis 65% aus Stickstoff, wobei Helium den Rest ausmacht.

**5.** Verfahren nach einem der Ansprüche 1 bis 4, **dadurch gekennzeichnet, dass** es sich bei dem Laser um einen $CO_2$-Laser handelt.

**6.** Verfahren nach einem der Ansprüche 1 bis 5, **dadurch gekennzeichnet, dass** sich der Schweißvorgang über die gesamte Tiefe des Werkstücks erstreckt.

**7.** Verfahren nach einem der Ansprüche 1 bis 6, **dadurch gekennzeichnet, dass** die Gasmischung zu 46 bis 60 Volumen% aus Stickstoff besteht, wobei Helium den Rest (von 100 %) ausmacht.

**8.** Verfahren zur Herstellung eines verschweißten Rohres aus einem Blech aus austenitischem, ferritischem oder martensitischem Edelstahl, dessen Längskanten durch Anwendung eines Schweißverfahrens nach einem der Ansprüche 1 bis 7 miteinander verschweißt werden, wobei sich der Schweißvorgang über die gesamte Tiefe oder nahezu über die gesamte Tiefe des Werkstücks erstreckt.

## FIGURE

## RÉFÉRENCES CITÉES DANS LA DESCRIPTION

**Documents brevets cités dans la description**

- DE 2713904 A
- DE 4034745 A
- JP 01048692 A
- JP 56122690 A
- WO 9734730 A
- JP 01005692 A
- DE 4123716 A
- JP 02030389 A
- US 4871897 A
- JP 230389 A
- JP 62104693 A

- JP 15692 A
- JP 15693 A
- JP 15694 A
- JP 220681 A
- JP 220682 A
- JP 220683 A
- WO 8801553 A
- WO 9814302 A
- DE 3619513 A
- DE 3934920 A
- JP 09220682 A